# EUROPEAN PATENT SPECIFICATION

(11) **EP 0 796 230 B1**
(45) Date of publication and mention of the grant of the patent: **26.01.2000**
(21) Application number: 95929250.9
(22) Date of filing: 24.08.1995
(51) Int. Cl.: C04B 18/10, C04B 7/12, C04B 2/06, B01J 8/18

(54) **A METHOD OF PREPARING A PUZZOLANIC MATERIAL FORM PAPER RESIDUE AND A METHOD FOR THE MANUFACTURE OF CEMENT FROM SAID MATERIAL**
VERFAHREN ZUR HERSTELLUNG EINES PUZZOLANMATERIALS AUS PAPIERSCHLAMM UND VERFAHREN ZUR HERSTELLUNG VON ZEMENT AUS DIESEM MATERIAL
PROCEDE DE PRODUCTION D'UN MATERIAU PUZZOLANIQUE A PARTIR DE RESIDUS DE PAPIER, ET PROCEDE PERMETTANT DE PRODUIRE DU CIMENT A PARTIR DUDIT MATERIAU

(30) Priority: 24.08.1994 NL 9401366
(43) Date of publication of application: 24.09.1997
(73) Proprietor: CDEM Holland B.V., 7005 AA Doetinchem (NL)
(72) Inventor: BIERMANN, Joseph, Jan, Peter, NL-3712 AH Huis Ter Heide (NL); BLEIJERVELD, Robert, NL-3053 ZL Rotterdam (NL); VOOGT, Nicolaas, NL-7361 TA Beekbergen (NL); HULSCHER, Hendrik, Jacobus, NL-5432 CA Cuyk (NL)
(74) Representative: Kupecz, Arpad
(86) International application number: PCT/NL95/00280
(87) International publication number: WO 96/06057

(56) References cited:
- BE-A- 1 005 929
- DE-A- 1 771 879
- DE-A- 3 838 379
- FR-A- 2 642 747
- GB-A- 394 518
- CHEMICAL ABSTRACTS, vol. 103, no. 18, 4 November 1985 Columbus, Ohio, US; abstract no. 146307x, CEMENT RESEARCH INSTITUTE OF INDIA page 278; & IN,A,154 384 (ID.)

## Description

The present invention relates to a method for the thermal conversion of kaolin-containing material to a material of puzzolanic properties, wherein the kaolin-containing material is thermally treated in a fluidized bed installation having a freeboard in the presence of oxygenous gas.

Such a method is known from DE OS 38 38 379. Paper residue is incinerated in a fluidized bed at a temperature above 400°C, preferably at 800-1000°C. The resulting sludge paper ash is used in the manufacture of sandlime brick. The sludge paper ash obtained at 800-1000°C is added in an amount of 0.5-2% to mortar of lime and sand. Sandlime brick manufactured with such mortar no longer expands or shrinks under the influence of moisture.

BE-A-1005 929 relates to a method of preparing artificial puzzolanic by incinerating Kaolin-containing paper residue.

It is the object of the present invention to improve the method according to the preamble and in particular to provide a method for the thermal conversion of kaolin-containing material to a material of improved puzzolanic and hydraulic properties.

To this end the method according to the invention is characterized in that the fluidized bed is operated at a temperature between 720 and 850°C and the temperature of the freeboard is 850°C or lower, and that the fluidized bed is provided with means to promote heat transfer.

By accurately controlling the temperature in the fluidized bed and the freeboard a puzzolanic material is obtained containing metakaolinite and calcium oxide converted into calcium hydroxide. Careful control of the process conditions avoids that the produced metakaolinite is converted into a material of poorer puzzolanic properties. Further, the puzzolanic material obtained only contains a limited amount of calcium oxide, which oxide - in contrast with the hydroxide-has adverse effects on the strength of the concrete and hardened cement manufactured with puzzolanic material. Due to the presence of water that is released during incineration, that is present in the starting material and that optionally is added, it is possible to obtain in one single plant - the fluidized bed installation - a puzzolanic material which is suitable as cement or one of its components. In this way the method according to the invention saves on a further installation for the conversion of calcium oxide into calcium hydroxide, which, from an economic point of view, is favourable.

The kaolin-containing material used is preferably waste paper or residues that stem from recycling of waste paper for reuse in the paper industry.

Said residues, which may serve as starting material in the method according to the invention, may be inferior paper residue, that is to say paper residue having on average too short a fibre length or sludge from waste water purification plants of the paper industry using waste paper as basic material. In this way a residue is utilized for the manufacture of a high-grade puzzolanic material.

According to a preferred embodiment the method according to the invention is characterized in that the temperature of the fluidized bed is 780°C.

Concrete manufactured with puzzolanic material manufactured at this temperature is shown to possess the greatest compression strength.

The present invention also relates to a method for the manufacture of cement, characterized in that puzzolanic material manufactured according to the invention is added to the usual starting material, or part of the usual starting materials for cement is replaced by the puzzolanic material.

Because of the good hydraulic properties of the puzzolanic material manufactured by the method according to the invention, this cement may be used for the manufacture of concrete having at least an equivalent compression strength.

The term "cement" as used in the present invention should be interpreted in the broadest sense and comprises dry and wet cement products which may or may not contain gravel, etc.

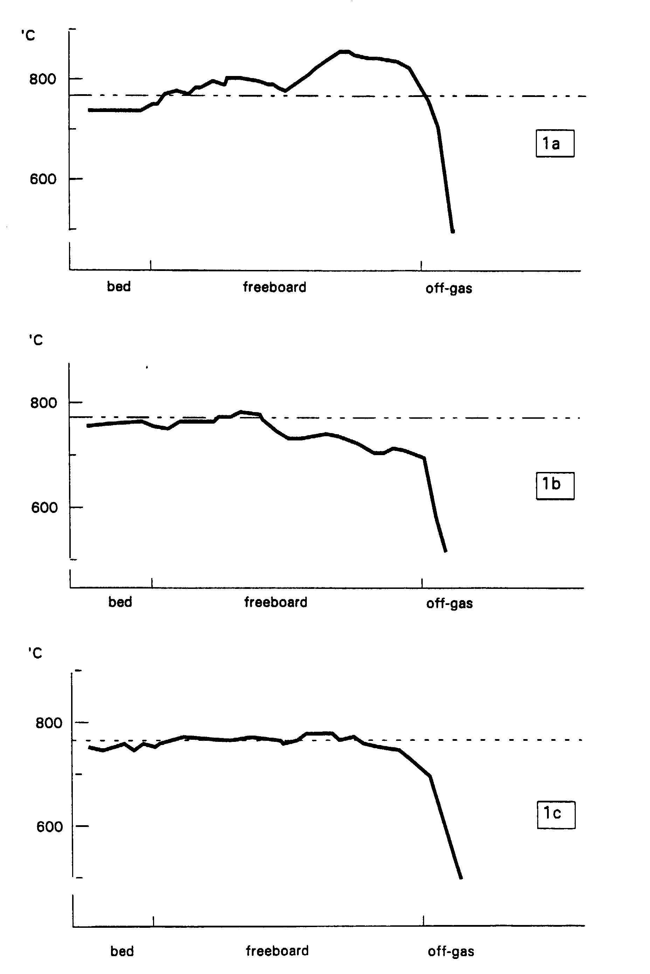

The invention will now be further elucidated by means of the following embodiment example, wherein reference is made to Figures 1a, b and c representing graphs of the temperature profile in a fluidized bed installation.

Paper residue derived from the preparation of starting material based on waste paper from the paper industry is, according to the invention, incinerated in a fluidized bed installation at a temperature of preferably 750 to 800°C and in particular 780°C, wherein the temperature in the freeboard is lower than or the same as that in the fluidized bed, yielding a puzzolanic material. The puzzolanic material of the present invention is understood to be a material possessing hydraulic and/or the hydraulic properties of other material strengthening properties. The incorporated paper residue has a water content of 25 to 75% by weight in relation to the total. All the kaolin is converted to metakaolin. Table A illustrates the compression strength of concrete manufactured with puzzolanic material prepared at different temperatures. This shows that an optimal puzzolanic material is obtained at a temperature of 780°C.

**Table A**

| Fluidized bed temperature | Compression strength |
|---|---|
| °C | MPa |
| 720 | 3.66 ± 0.15 |
| 760 | 3.84 ± 0.09 |
| 780 | 4.24 ± 0.17 |
| 800 | 4.23 ± 0.09 |
| 850 | 2.81 ± 0.09 |

Preparation: Mix 1 part puzzolanic material, 1 part calcium hydroxide, 5.4 parts standard sand and 2 parts water according to EN 196. Mixing time 3 min. Mixtures densified according to EN 196. Compression strength measured after hardening for 28 days.

The compression strengths at 780 and 800°C are comparable. As at 780°C the compression strength's sensitivity to change in temperature decreases, preference goes to 780°C. In addition, the products manufactured using puzzolanic material according to the invention show good green strength.

An agent promoting heat transfer, such as sand, is introduced into the fluidized bed. It happens quite often that in fluidized bed installations the heat transfer agent is blown out, ending up in the product. With the above-mentioned temperature there is, surprisingly, an increase in the heat transfer promoting agent stemming from material derived from the kaolin-containing material which, with respect to its composition, shows resemblance to the puzzolanic material according to the invention. This makes it possible to operate the fluidized bed with the aid of own-production heat transfer promoting agent. This not only takes away the necessity to purchase heat transfer promoting agent to replenish agent that was discharged and mixed with the product, but the product remains free from pollution by a different heat transfer promoting agent.

With a view to utilization in cement and/or concrete compositions a fine and restricted grain-size distribution of the product is desirable. The grains resulting from the method according to the invention have a diameter smaller than 250 µm, wherein 90% is smaller than 64 µm. This material is carried along with the waste gasses and is, according to an advantageous embodiment, separated into a coarse and a fine fraction. The coarse fraction is, mixed into the paper residue, fed back into the fluidized bed installation where it is reduced in size.

The heat distribution in the fluidized bed installation can be further improved by using a compaction feeder, such as a screw conveyor with a constricted opening discharging into the fluidized bed installation, so that the paper residue disintegrates less easily and there is less spark formation. This improves combustion performance and consequently the homogeneity of the heat distribution.

Fig. la shows the temperature distribution in a fluidized bed installation during the thermal processing of paper residue. One can see that with the applied degree of cooling of the freeboard the temperature there rises to 900°C, resulting in a material possessing less satisfactory puzzolanic properties (Table B). In Fig. 1b the insulation sheath around the freeboard has been removed and the temperature in the freeboard is maintained at below the fluidized bed temperature of 780°C. Table B shows that this results on the one hand in a puzzolanic material with which a product of good compression strength can be manufactured, but on the other hand that the consequential CO and CₓH_{y} emission is relatively high and the energy losses are economically rather unfavourable. In Fig. lc the same fluidized bed installation is used as in Fig. la, i.e. with insulation of the freeboard, in combination with a compaction screw for the conveyance of the paper residue. Because of the improved combustion performance a homogenous temperature distribution can be achieved which, as can be seen in Table B, is coupled with very low emission values.

**Table B**

| | Emission (mg/Nm³ at 11% O₂ in waste gas) | | Compression strength MPa |
|---|---|---|---|
| | CO | CₓH_{y} | |
| non-compacted feed; insulation | NA | NA | 3.27±0.05 |
| | | | |
| non-compacted feed; no insulation | 238 | 100 | 4.31±0.04 |
| | | | |
| compacted feed; insulation | 190 | <10 | 4.24±0.17 |
| Screw used: extrusion screw having a diameter at the end facing the fluidized bed installation 50% of the diameter of the end facing away from the fluidized bed installation. Preparation as in Table A. | | | |
| NA = not available. | | | |

Calcium oxide has adverse effects on the compression strength of concrete containing it. This is because in the course of time calcium oxide takes up carbon dioxide, forming calcium carbonate. This results in an increase in volume which weakens the concrete. The conversion of calcium oxide into calcium hydroxide as well as mixing calcium hydroxide with metakaolinite is known in the manufacture of cement. In the method according to the invention the freeboard of the fluidized bed is used for the conversion of calcium oxide into calcium hydroxide. Because only a short time is passed in the fluidized bed and in the freeboard - in the order of seconds to several minutes - the undesirable reaction of metakaolinite with calcium hydroxide and water is limited. The calcium oxide content in the product can also be reduced by suppressing the conversion of calcium carbonate. In this case a product of mainly puzzolanic properties is obtained. Suppression of calcium carbonate conversion can be achieved by applying methods which influence the chemical balance between calcium carbonate and calcium oxide plus carbon dioxide. An example of this method is raising the carbon dioxide concentration, for instance by choosing the right fuel (e.g. during the combustion of coal more carbon dioxide per energy unit is produced than during the combustion of natural gas).

The freeboard of the fluidized bed is maintained at a temperature below 850°C, preferably below 800°C. This prevents the metakaolinite formed during incineration from being converted into a product of poorer puzzolanic properties, as illustrated in Fig. 1a, b and Table B.

In order to allow the calcium oxide which is formed during combustion, to bind water to form calcium hydroxide, the freeboard - or alternatively a successive calcium oxide conversion chamber - is maintained at a temperature of 500°C or lower, in particular at 150-350°C. The temperature is achieved by cooling the freeboard respectively the calcium oxide conversion chamber, whereby the absorbed heat can be used for drying kaolin-containing material that is to be incinerated. This can be achieved by introducing water into said spaces. To obtain a good conversion, wherein undesirable reactions resulting in products of poorer puzzolanic properties are limited, the water vapour concentration in the freeboard respectively the alternative calcium oxide conversion chamber is maintained preferably at 30-50% by volume. In this manner, in a simple fluidized bed installation, a material is formed of good puzzolanic and hydraulic properties.

Concrete manufactured from Portland cement, to which the puzzolanic material produced by using the method according to the invention was added, is stronger than without this addition (Table C).

**Table C**

| Portland cement % | puzzolanic material % | Compression strength (MPa) |
|---|---|---|
| 100 | 0 | 39 ± 0.5 |
| 90 | 10 | 44.7 ± 1.6 |

Method of preparation: Mix 1 part Portland cement ± puzzolanic material with 3 parts standard sand and 0.5 parts water (according to EN 196).
Compression strength measured after hardening for 14 days.

The water required for the conversion of calcium oxide stems from the incineration of the starting material, and may include fuels used for additional heating of the fluidized bed, or from water present in the starting material and, if necessary, from water added to the fluidized bed or preferably the freeboard. The water fed to the freeboard of alternatively to the successive calcium oxide conversion chamber is preferably abstracted from the residues to be incinerated.

The composition of the puzzolanic material manufactured by the method according to the invention comprises 40% metakaolinite, 50% calcium hydroxide, calcium carbonate and calcium oxide, whereby the calcium oxide is present in such small amounts that it has a negligible effect on the compression strength of concrete containing it, and furthermore metals, chlorides and sulphates in concentrations which have no adverse effect on the strength and applicability of the products manufactured by using the puzzolanic material. It goes without saying that the exact composition also depends on the starting material used.

It is known that the temperature in the freeboard favourably affects the limitation of dioxin emissions. However, it is surprising to find that the combination of, on the one hand an incineration temperature between 750 and 800°C and in particular 780°C and the consequential through put and on the other hand the lowered temperature of the freeboard to below the fluidized bed temperature, should result in dioxin emissions of a degree that even without any further equipment for the removal of dioxins, the strict Dutch environmental standards are met (Table D). This aspect also contributes to the economy of the method according to the invention.

**Table D**

| T_{fluidized bed} | T_{freeboard} | units of dioxin |
|---|---|---|
| °C | °C | ngT_{eq}/m³ |
| 850 | 850 | 0.35 |
| 780 | 770-780 | 0.034 |
| (Dutch standard: 0.1 ng T_{eq}/m₃) | | |

By using the method according to the invention residues, which otherwise would have to be disposed of at high costs, can be utilized in the manufacture of a high-grade material of puzzolanic properties.

## Claims

1. A method for the thermal conversion of kaolin-containing material to a material of puzzolanic properties, wherein the kaolin-containing material is thermally treated in a fluidized bed installation having a freeboard in the presence of oxygenous gas, **characterized** in that the fluidized bed is operated at a temperature between 720 and 850°C and the temperature of the freeboard is 850°C or lower, and that the fluidized bed is provided with means for promoting heat transfer.

2. A method according to claim 1, **characterized** in that the kaolin-containing material used is waste paper or residues that stem from recycling waste paper for reuse in the paper industry.

3. A method according to claim 1 or 2, **characterized** in that the temperature in the fluidized bed is 750-800°C.

4. A method according to claim 3, **characterized** in that the temperature in the fluidized bed is 780°C.

5. A method according to one of the preceding claims, **characterized** in that the temperature in the freeboard is maintained at the same level as or lower than the temperature in the fluidized bed.

6. A method according to claim 5, **characterized** in that the temperature in the freeboard or a successive calcium oxide conversion chamber is maintained at 500°C or lower.

7. A method according to claim 6, **characterized** in that the temperature in the freeboard or the successive calcium oxide conversion chamber is maintained at 150-350°C.

8. A method according to one of the preceding claims, **characterized** in that the freeboard or the successive calcium oxide conversion chamber is cooled and the absorbed heat is utilized for drying kaolin-containing material that is to be thermally treated.

9. A method according to one of the preceding claims, **characterized** in that the water vapour concentration in the freeboard or the successive calcium oxide conversion chamber is maintained at 30-50% by volume.

10. A method according to one of the preceding claims, **characterized** in that water is fed to the freeboard or a successive calcium oxide conversion chamber.

11. A method according to claim 10, **characterized** in that the water fed to the freeboard is abstracted from kaolin-containing material that is to be incinerated.

12. A method according to one of the preceding claims, **characterized** in that incineration takes place in the presence of material formed from kaolin-containing material, as means to promote the heat transmission.

13. A method according to one of the claims 1 to 12, **characterized** in that the kaolin-containing material is fed to the fluidized bed installation in compacted form.

14. A method according to one of the claims 1 to 12, **characterized** in that the puzzolanic material is separated into a coarse and a fine fraction and that the coarse fraction mixed with the kaolin-containing material is fed back into the fluidized bed installation.

15. A method for the manufacture of cement **characterized** in that puzzolanic material manufactured according to any one of the claims 1 to 14 is added to the usual starting materials for cement, or that part of the usual starting materials for cement is replaced by the puzzolanic material.

## Patentansprüche

1. Verfahren zur thermischen Umwandlung von kaolinhaltigem Material in ein Material mit puzzolanischen Eigenschaften, wobei das kaolinhaltige Material in einem Wirbelbettaufbau mit Freibord in Gegenwart von sauerstoffhaltigem Gas wärmebehandelt wird, **dadurch gekennzeichnet**, daß das Wirbelbett bei einer Temperatur von 720 bis 820°C betrieben wird und daß die Temperatur des Freibordes 850°C oder weniger beträgt und daß das Wirbelbett mit Einrichtungen zum beschleunigten Wärmeaustausch ausgestattet ist.

2. Verfahren nach Anspruch 1, **dadurch gekennzeichnet**, daß das verwendete kaolinhaltige Material Papierabfall oder aus Recycling-Papierabfall stammende Reste zur Wiederverwertung in der Papierindustrie sind.

3. Verfahren nach Anspruch 1 oder 2, **dadurch gekennzeichnet**, daß die Temperatur im Wirbelbett 750-800°C beträgt.

4. Verfahren nach Anspruch 3, **dadurch gekennzeichnet**, daß die Temperatur im Wirbelbett 780°C beträgt.

5. Verfahren nach einem der vorhergehenden Ansprüche, **dadurch gekennzeichnet**, daß die Temperatur im Freibord auf demselben Niveau oder niedriger gehalten wird als die Temperatur im Wirbelbett.

6. Verfahren nach Anspruch 5, **dadurch gekennzeichnet**, daß die Temperatur im Freibord oder in einer darauffolgenden Calciumoxid-Umwandlungskammer bei 500°C oder niedriger gehalten wird.

7. Verfahren nach Anspruch 6, **dadurch gekennzeichnet**, daß die Temperatur im Freibord oder in der darauffolgenden Calciumoxid-Umwandlungskammer bei 150-350°C gehalten wird.

8. Verfahren nach einem der vorhergehenden Ansprüche, **dadurch gekennzeichnet**, daß das Freibord oder die anschließende Calciumoxid-Umwandlungskammer abgekühlt und die absorbierte Wärme zum Trocknen des kaolinhaltigen Materials, das wärmebehandelt werden soll, verwendet wird.

9. Verfahren nach einem der vorhergehenden Ansprüche, **dadurch gekennzeichnet**, daß die Wasserdampfkonzentration im Freibord oder in der folgenden Calciumoxid-Umwandlungskammer bei 30-50 Vol.-% gehalten wird.

10. Verfahren nach einem der vorhergehenden Ansprüche, **dadurch gekennzeichnet**, daß das Wasser dem Freibord oder einer anschließenden Calciumoxid-Umwandlungskammer zugeführt wird.

11. Verfahren nach Anspruch 10, **dadurch gekennzeichnet**, daß das dem Freibord zugeführte Wasser dem kaolinhaltigen Material, das verascht werden soll, entzogen wird.

12. Verfahren nach einem der vorhergehenden Ansprüche, **dadurch gekennzeichnet**, daß die Veraschung in Gegenwart von aus dem kaolinhaltigen Material gebildetem Material als Mittel zur Beschleunigung der Wärmeübertragung erfolgt.

13. Verfahren nach einem der Ansprüche 1 bis 12, **dadurch gekennzeichnet**, daß das kaolinhaltige Material dem Wirbelbettaufbau in kompakter Form zugeführt wird.

14. Verfahren nach einem der Ansprüche 1 bis 12, **dadurch gekennzeichnet**, daß das puzzolanische Material in eine Grob- und in eine Feinfraktion aufgetrennt wird und daß die mit dem kaolinhaltigen Material vermischte Grobfraktion wieder in die Wirbelbettanordnung zurückgeführt wird.

15. Verfahren zur Herstellung von Zement, **dadurch gekennzeichnet**, daß das nach einem der Ansprüche 1 bis 14 hergestellte puzzolanische Material den üblichen Ausgangsmaterialien für Zement zugesetzt wird oder daß ein Teil der üblichen Ausgangsmaterialien für Zement durch das puzzolanische Material ersetzt wird.

## Revendications

1. Procédé pour la transformation thermique d'une matière contenant du kaolin en une matière ayant des propriétés pouzzolaniques, dans lequel la matière contenant du kaolin est soumise à un traitement thermique dans une installation à lit fluidisé ayant un bord franc en présence d'oxygène gazeux, caractérisé en ce que le lit fluidisé est soumis à un fonctionnement à une température comprise dans l'intervalle de 720 à 850°C et la température du bord franc est égale ou inférieure à 850°C, et en ce que le lit fluidisé est muni de moyens pour activer le transfert de chaleur.

2. Procédé suivant la revendication 1, caractérisé en ce que la matière contenant du kaolin qui est utilisée consiste en papier de récupération ou résidus qui proviennent du recyclage du papier de récupération à des fins de réutilisation dans l'industrie du papier.

3. Procédé suivant la revendication 1 ou 2, caractérisé en ce que la température dans le lit fluidisé est comprise dans l'intervalle de 750 à 800°C.

4. Procédé suivant la revendication 3, caractérisé en ce que la température dans le lit fluidisé est égale à 780°C.

5. Procédé suivant l'une des revendications prédédentes, caractérisé en ce que la température dans le bord franc est maintenue à une valeur égale ou inférieure à la température dans le lit fluidisé.

6. Procédé suivant la revendication 5, caractérisé en ce que la température dans le bord franc ou une chambre de conversions successives en oxyde de calcium est maintenue à une valeur égale ou inférieure à 500°C.

7. Procédé suivant la revendication 6, caractérisé en ce que la température dans le bord franc ou la chambre de conversions successives en oxyde de calcium est maintenue dans l'intervalle de 150 à 350°C.

8. Procédé suivant l'une des revendications précédentes, caractérisé en ce que le bord franc ou la chambre de conversions successives en oxyde de calcium est refroidie et la chaleur absorbée est utilisée pour le séchage de la matière contenant du kaolin qui doit être soumise au traitement thermique.

9. Procédé suivant l'une des revendications précédentes, caractérisé en ce que la concentration de vapeur d'eau dans le bord franc ou la chambre de conversions successives en oxyde de calcium est maintenue dans l'intervalle de 30 à 50 % en volume.

10. Procédé suivant l'une des revendications précédentes, caractérisé en ce que l'eau est introduite dans le bord franc ou une chambre de conversions successives en oxyde de calcium.

11. Procédé suivant la revendication 10, caractérisé en ce que l'eau introduite dans le bord franc est extraite de la matière contenant du kaolin qui doit être incinérée.

12. Procédé suivant l'une des revendications précédentes, caractérisé en ce que l'incinération s'effectue en présence d'une matière formée à partir de la matière contenant du kaolin, comme moyen d'améliorer la transmission de la chaleur.

13. Procédé suivant l'une des revendications 1 à 12, caractérisé en ce que la matière contenant du kaolin est introduite dans l'installation à lit fluidisé sous une forme compactée.

14. Procédé suivant l'une des revendications 1 à 12, caractérisé en ce que la matière pouzzolanique est séparée en une fraction grossière et une fraction fine et en ce que la fraction grossière mélangée à la matière contenant du kaolin est réintroduite dans l'installation à lit fluidisé.

15. Procédé pour la production de ciment, caractérisé en ce que la matière pouzzolanique produite suivant l'une quelconque des revendications 1 à 14 est ajoutée aux matières de départ usuelles pour ciment ou en ce qu'une partie des matières de départ usuelles pour ciment est remplacée par la matière pouzzolanique.
